# EUROPÄISCHE PATENTSCHRIFT

(11) **EP 0 504 737 B1**
(45) Veröffentlichungstag und Bekanntmachung des Hinweises auf die Patenterteilung: **18.06.1997**
(21) Anmeldenummer: 92104254.5
(22) Anmeldetag: 12.03.1992
(51) Int. Cl.: H04B 7/08

(54) **UKW-Autoradio mit Diversitykombinator**
FM car radio with diversity combiner
Autoradio FM à combineur en diversité

(30) Priorität: 19.03.1991 DE 4108933
(43) Veröffentlichungstag der Anmeldung: 23.09.1992
(73) Patentinhaber: Blaupunkt-Werke GmbH, 31132 Hildesheim (DE)
(72) Erfinder: Wiedemann, Kurt, W-3200 Hildesheim (DE)

(56) Entgegenhaltungen:
- EP-A- 0 319 782

## Beschreibung

Die Erfindung betrifft ein UKW-Autoradio zum Betrieb an mehreren Empfangsantennen.

In der DOS 37 41 698 ist ein Empfänger für Radiowellen im VHF- und UHF-Bereich zum Betrieb an mehreren, an unterschiedlichen Stellen an demselben Fahrzeug angebrachten Antennen beschrieben, bei dem die Ausgangssignale der einzelnen Antennen über die nachgeschalteten Eingangsstufen nach geeigneter Drehung der Phasenlage einer Summierschaltung zugeführt werden. .

Hierbei stellte sich die Aufgabe, nach einem günstigen Aufbau einer solchen Summierschaltung für einen modularen Geräteaufbau, bei dem die der Summierschaltung vorgeschalteten, jeder Antenne nachgeschalteten Baugruppen der Eingangsstufen jeweils auf einer auswechselbaren Platine zusammengefaßt sind.

Die Erfindung löst diese Aufgabe durch den im Anspruch 1 gekennzeichneten Aufbau der Summierschaltung.

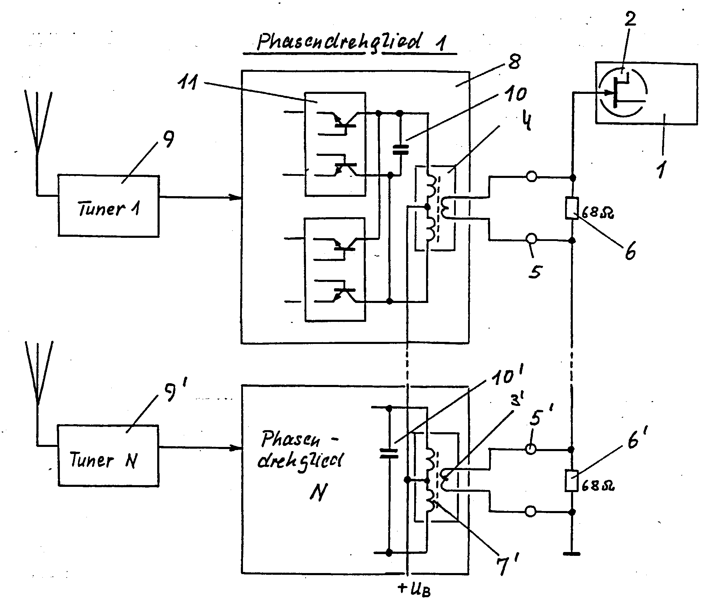

Anhand der Zeichnung wird ein Ausführungsbeispiel der Erfindung näher erläutert.

Der Ausgang der Summierschaltung arbeitet auf einem Verstärker 1, in dessen Eingang ein Feldeffekttransistor 2 liegt, der das Summiersignal verstärkt. Die Eingangsstrecke eines Feldeffekttransistors ist bekanntlich hochohmig. In dem Eingangskreis des Feldeffekttransistors sind vier Sekundärwicklungen 3 von mehreren Übertragern 4 in Reihe geschaltet. Die Übertrager sind bei fünf steckbar mit der übrigen Schaltung des Feldeffekttransistors verbunden.

Parallel zu der Sekundärwicklung 3, aber zur Schaltung des Feldeffekttransistors gehörig, liegt ein Widerstand 6.

Die Primärwicklung 7 des Übertragers 4 ist Ausgang eines Phasendrehgliedes 8, welches hier der Eingangsstufe 9 nachgeschaltet ist. Einzelheiten dieser Phasendrehglieder, deren Steuerung und deren Funktion sind der bereits erwähnten DOS 37 41 698 zu entnehmen.

Die Primärwicklung 7 bildet zusammen mit einem Kondensator 10 einen Bandpaß. Die Bandpässe sind auf die Zwischenfrequenz des Autoradios abgestimmt.

Vor der Primärwicklung 7 des Übertragers 4 liegen - als Ausgänge der in der DOS 37 41 698 erwähnten Schaltung gesteuerte - Stromquellen 11, deren Ströme sich in der Primärwicklung 7 des Übertragers wie angedeutet überlagern.

Die Durchlaßkurve der Bandpässe müssen der späteren Auswertung der durchgelassenen Signale wegen recht breitbandig gewählt werden. Daher ist es unbedenklich, wenn jeder Bandpaß durch den Widerstand 6 bedämpft ist. Durch Wahl der Widerstandsgröße und des Übertragungsverhältnisses des Übertragers 4 läßt sich der Verlauf der Durchlaßkurve beeinflussen. Die Größenordnung des Widerstandes - im Ausführungsbeispiel 68 Ohm - sind im jeden Fall klein gegen den hochohmigen Eingang des Feldeffekttransistors 2. Daher bleibt die Signalverarbeitung in und nach dem Feldeffekttransistor unbeeinflußt, wenn ein oder zwei Übertrager aus ihren Steckernschlüssen herausgezogen sind.

Der erfindungsgemäße Aufbau der Summierschaltung ist also besonders für die Summierung einer variablen Anzahl von Antennensignalen gut geeignet.

## Patentansprüche

1. UKW-Autoradio zum Betrieb an mehreren an unterschiedlichen Stellen des Fahrzeugs angebrachten Antennen, deren in den zwischenfrequenten Bereich umgesetzten Empfangssignale nach einer gesteuerten Phasenverschiebung summiert und danach demoduliert werden,
dadurch gekennzeichnet,
daß in der Summierschaltung die Sekundärwicklungen (3) von Übertragern (4), welche die Ausgänge der Phasenschieber (8) bilden, in Reihe geschaltet sind,
daß die Sekundärwicklungen mit der nachfolgenden Schaltung (1) über eine Steckverbindung geführt sind und daß zwischen den Steckanschlüssen (5) zur nachfolgenden Schaltung (1) ein Widerstand (6) liegt.

2. UKW-Autoradio nach Anspruch 1,
dadurch gekennzeichnet,
daß der Widerstand derart bemessen ist, daß die Durchlaßkurve eines von der Primärwicklung (7) des Übertragers (4) und einer Kapazität (10) gebildeten, auf die Zwischenfrequenz des Autoradios abgestimmter Bandpaß breitbandig bleibt.

## Claims

1. VHF car radio for operating on a plurality of antennas mounted at different points on the vehicle, the reception signals of which antennas, having been converted into the intermediate frequency range, are summed in a controlled phase shift and then demodulated, characterized in that, in the summing circuit, the secondary windings (3) of transformers (4) which form the outputs of the phase shifters (8), are connected in series, in that the secondary windings, with the following circuit (1), are lead via a plug connection, and in that a resistor (6) is located between the plug terminals (5) for the following circuit (1).

2. VHF car radio according to Claim 1, characterized in that the resistor is dimensioned such that the conducting-state curve of a band-pass filter which is formed by the primary winding (7) of the transformer (4) and a capacitor (10) and is tuned to the intermediate frequency of the car radio remains broadband.

## Revendications

1. Autoradio FM alimenté par plusieurs antennes prévues à des endroits différents du véhicule et dont les signaux de réception, convertis vers la plage des fréquences intermédiaires, sont additionnés après un déphasage commandé puis ils sont modulés,
caractérisé en ce que
- dans le circuit additionneur les enroulements secondaires (3) des transformateurs (4) qui forment les sorties des déphaseurs (8) sont branchés en série,
- les enroulements secondaires passent avec le circuit en aval (1) par des connecteurs et entre les branchements (5) vers le circuit suivant (1), il y a une résistance (6).

2. Autoradio FM selon la revendication 1,
caractérisé en ce que
la résistance est dimensionnée pour la courbe passante d'un filtre passe-bande formé par l'enroulement primaire (7) du transformateur (4) et une capacité (10), accordée sur la fréquence intermédiaire de l'autoradio, reste à bande large.
